(19) Europäisches Patentamt
European Patent Office
Office européen des brevets

(11) **EP 3 721 238 B1**

(12) **EUROPÄISCHE PATENTSCHRIFT**

(45) Veröffentlichungstag und Bekanntmachung des Hinweises auf die Patenterteilung:
**15.06.2022   Patentblatt 2022/24**

(21) Anmeldenummer: **18799761.4**

(22) Anmeldetag: **07.11.2018**

(51) Internationale Patentklassifikation (IPC):
**G01P 15/16** *(2013.01)*        **G01P 3/489** *(2006.01)*

(52) Gemeinsame Patentklassifikation (CPC):
**G01P 15/165; G01P 3/489**

(86) Internationale Anmeldenummer:
**PCT/EP2018/080423**

(87) Internationale Veröffentlichungsnummer:
**WO 2019/110228 (13.06.2019 Gazette 2019/24)**

(54) **GRADIENTENBESTIMMUNG FÜR DREHZAHLMESSUNGEN**

GRADIENT DETERMINATION FOR MEASURING ROTATIONAL SPEEDS

DÉTERMINATION DE GRADIENT POUR MESURES DE VITESSE DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.12.2017   DE 102017221876**

(43) Veröffentlichungstag der Anmeldung:
**14.10.2020   Patentblatt 2020/42**

(73) Patentinhaber: **ZF Friedrichshafen AG 88046 Friedrichshafen (DE)**

(72) Erfinder:
- **WENDZEL, Andreas 88287 Grünkraut (DE)**
- **DREIBHOLZ, Ralf 88074 Meckenbeuren (DE)**

(56) Entgegenhaltungen:
| DE-A1- 2 918 802 | DE-A1- 3 401 751 |
| US-A- 4 635 201 | US-A- 5 916 295 |
| US-A- 6 130 928 | US-A1- 2008 110 283 |
| US-B2- 9 470 175 | |

EP 3 721 238 B1

**Beschreibung**

Die Erfindung betrifft eine Anordnung nach dem Oberbegriff von Anspruch 1 und ein Verfahren nach dem Oberbegriff von Anspruch 3. Ableitungen von Messgrößen werden in einer Vielzahl von Anwendungen verwendet.

Dazu werden entweder einfache Differenzenquotienten oder digitale Filter (z.B. Savitzki-Golay-Filter) verwendet. Als einfaches regelungstechnisches Element kann ein DT1-Glied verwendet werden. Allen Ableitungsbildungen ist gemein, dass Rauschen im Grundsignal zu einem starken Rauschen der Ableitung führt. Soll die Ableitung gefiltert werden - beispielsweise durch ein digitales Filter mit großer Fensterbreite oder ein DT1-Glied mit hoher Zeitkonstante, so ergibt sich eine Phasenverschiebung zwischen Eingangssignal und der Ableitung dieses Signals.

Ein gebräuchliches Verfahren zur Ermittlung von Drehzahlen beruht darauf, dass

Konturen eines sich drehenden Geberrades erfasst und anschließend ausgewertet werden. Hierzu kann beispielsweise mittels einer Totzeitmessung ermittelt werden, wie viele Zähne den Sensor pro Zeitabschnitt passieren. Es wird der zeitliche Abstand zwischen den letzten beiden den Sensor passierenden Zähnen bestimmt.

Die realisierbaren Frequenzen der Abtastung des Sensorsignals steigen aufgrund der technologischen Weiterentwicklung stetig an. Mit höheren Abtastfrequenzen gehen verschärfte Anforderungen, aber auch verbesserte Möglichkeiten einher, den Drehzahlgradienten genauer zu bestimmen. In vielen bisherigen Softwareanwendungen werden Drehzahlen alle 10 ms erfasst. Wird die Schrittweite verringert, etwa auf 1 ms, passieren bei konstanter Drehzahl pro Abtastzeitabschnitt rechnerisch nur ein Zehntel der Markierungen des Geberrads den Sensor. Abhängig von der Drehzahl und der Zahl der Markierungen des Geberrads gibt es somit deutlich mehr Zeitschritte, in denen kein Zahn das Geberrad passiert, d.h. keine neue Drehzahlinformation vorliegt. Bei fortlaufender Berechnung des Drehzahlgradienten muss aber auch in Zeitpunkten ohne neue Drehzahlinformation ein Signal gebildet werden können. US-A- 4 635 201 schlägt vor, einen Drehzahlgradienten jeweils nach m gemessenen Signalpulsen zu berechnen. US-A- 5 916 295 erwähnt einen Mindestabstand Tmin zwischen zwei Geschwindigkeitswerten, aus denen ein Gradient gebildet wird. US-A- 2008/110283 speichert Zeitstempel für jeden Sensorimpuls und fordert einen definierten zeitlichen Mindestabstand zwischen den Stützpunkten, an denen die Geschwindigkeit und ihr Gradient bestimmt werden.

Der Erfindung liegt die Aufgabe zugrunde, die den aus dem Stand der Technik bekannten Lösungen innewohnenden Nachteile zu eliminieren. Insbesondere soll ein

Drehzahlgradient mit möglichst geringer Phasenverschiebung und geringem Signalrauschen bereitgestellt werden. Bei Drehungen aus dem Stillstand heraus und in Richtung des Stillstands soll der Drehzahlgradient möglichst genau erfassbar sein.

Diese Aufgabe wird gelöst durch eine Anordnung nach Anspruch 1 und ein Verfahren nach Anspruch 3. Bevorzugte Weiterbildungen sind in den Unteransprüchen enthalten.

Die Anordnung umfasst ein drehbares Mittel, einen Sensor und eine Auswerteinheit.

Das Mittel ist frei und unbeschränkt um einen beliebigen Winkel, insbesondere um einen Winkel von mehr als 360° verdrehbar.

Das Mittel weist eine oder mehrere Markierungen auf. Die Anzahl der Markierungen beträgt a. Bei dem Mittel kann es sich um ein Geberrad handeln, dass drehfest zu einer Welle oder einer Achse, insbesondere auf der Achse oder Welle, fixiert ist. Als Geberrad eignet sich etwa eine Lochscheibe, die umlaufend mit Löchern versehen ist. Jeweils zwei Löcher werden durch einen Steg getrennt, der zwischen den beiden Löchern hindurch verläuft. Als Geberrad eignet sich auch ein Zahnrad, dessen Zähne zugleich als Markierungen benutzt werden.

Als Sensor eignet sich unter anderem ein induktiver Sensor, ein Magnetfeldsensor oder ein optoelektronischer Sensor.

Der Sensor bzw. ein von dem Sensor erfasster Bereich ist auf die Markierungen ausgerichtet. Wenn das Mittel sich dreht, passieren die Markierungen den erfassten Bereich zyklisch. Dies bedeutet, dass jede Markierung den von dem Sensor erfassten Bereich genau einmal passiert, wenn das Mittel sich um 360° dreht.

Die Markierungen passieren den von dem Sensor erfassten Bereich, indem jeweils mindestens ein Teil einer Markierung in den Bereich eintritt, den Bereich durchläuft und aus dem Bereich wieder austritt. Beim Passieren einer Markierung generiert der Sensor ein Signal. Das Signal kann generiert werden, wenn mindestens ein Teil der Markierung in den Bereich eintritt, den Bereich verlässt oder, während es sich in dem Bereich befindet. Das Signal wird zu der Auswerteinheit übertragen. Diese ist ausgebildet, jedem Signal einen Zeitpunkt $t_i$ seiner Übertragung, mit $i \in \{0,1, ...\}$ und $t_i < t_{i+1}$ für alle $i \in \{0,1, ... \}$, zuzuordnen und als Maß für eine Drehzahl des Mittels eine Funktion $n\,(t)$ in Abhängigkeit der Zeit $t$ zu berechnen, mit

$$n\,(t_i) = \frac{1}{a \cdot (t_i - t_{i-1})}$$

für alle $i \in \{1, 2, ... \}$.

Die Zeitpunkte $t_i$ der Übertragung eines Signals entsprechen Zeitpunkten, in denen eine Markierung den von dem Sensor erfassten Bereich passiert.

Erfindungsgemäß ist die Auswerteinheit zudem ausgebildet, als Maß für einen Gradienten bzw. eine Änderung der Drehzahl des Mittels eine Funktion m (t) in Abhängigkeit der Zeit $t$ zu berechnen, mit

$$m\left(t_j\right) = \frac{n\left(t_j\right) - n\left(t_k\right)}{t_j - t_k}$$

für mindestens einen, vorzugsweise alle $j \in \{1, 2, ... \}$. Dabei ist $k \in \{0, 1, ...\}$ so gewählt, dass gilt: $t_k \leq t_j - T < t_{k+1}$, mit einer Konstanten $T$.

Erfindungsgemäß fließen somit in die Ermittlung des Drehzahlgradienten nur Drehzahlen ein, die zu Zeitpunkten ermittelt wurden, in denen eine Markierung den von dem Sensor erfassten Bereich passiert hat. Zwischen den Zeitpunkten liegt ein Zeitintervall von mindestens $T$.

In vielen Anwendungen sind insbesondere die Verzögerung des drehbaren Mittels zum Stillstand und die Bewegung aus dem Stillstand heraus von Interesse. Mit Hilfe des erfindungsgemäßen Verfahrens werden bei der Bewegung aus dem Stillstand heraus zeitnah Gradientenwerte gebildet.

Insbesondere bei langsamer Drehzahl ergibt sich ein deutlich verbessertes Signal, da sich der Abstand der zur Gradientenbildung herangezogenen Zeitpunkte vergrößert. Der Gradient wird dann anhand weniger Sensorinformationen gebildet, um einen möglichst aktuellen Wert des Gradienten zu ermitteln. Bei sehr kleinen Drehzahlen wird der Gradient über den beiden letzten vorliegenden Sensorsignalen gebildet.

Das erfindungsgemäße Verfahren zeichnet sich dadurch aus, dass der Gradient bei höheren Drehzahlen - wenn also Sensorsignale in hinreichend kurzen Zeitabständen vorliegen - nicht über benachbarten Abtastschritten gebildet wird, sondern über die parametrierbare Zeitkonstante $T$, die mehrere Durchgänge einer Markierung durch den von dem Sensor erfassten Bereich abdeckt. Der Rauschanteil des Sensorsignals, der in die Gradientenbildung eingeht, wird so vermindert.

Anstelle der erfindungsgemäßen Bestimmung des Drehzahlgradienten als Differenzenquotient ist es denkbar, ein digitales Filter mit variabler Fensterbreite zu verwenden. Dies entspricht einer variablen Anzahl von Messwerten. Somit werden nicht nur der erste und letzte Wert der betrachteten Zeitspanne, sondern mehrere Werte zur Gradientenbestimmung verwendet. Eine solche Alternative fällt jedoch nicht unter den Schutzumfang der Ansprüche.

Es ist üblich, eine kleinste zu erfassende Drehzahl $n_{min}$ zu definieren. Sollte in einer daraus abgeleiteten Zeitspanne keine Markierung den von dem Sensor erfassten Bereich passieren, wird Stillstand angenommen. In diesem Fall wird zur Gradientenbestimmung dennoch die theoretisch ermittelte Drehzahl gespeichert. Als Gradient wird der Wert 0 ausgegeben.

Wenn das drehbare Mittel nach längerem Stillstand beginnt, sich erneut zu drehen, tritt aufgrund der Drehung eine Markierung in den von dem Sensor erfassten Bereich ein. Aufgrund des Stillstands ist der zeitliche Abstand zwischen der Erfassung dieser Markierung und der letzten Markierung, welche den von dem Sensor erfassten Bereich passiert hat, sehr groß. Dies würde einer Drehzahl entsprechen, die unterhalb der Mindestdrehzahl $n_{min}$ liegen würde. Entsprechend würde die Auswerteinheit als Drehzahl den Wert 0 berechnen. Ebenso würde der Drehzahlgradient 0 betragen.

Passiert die nächste Markierung den von dem Sensor erfassten Bereich, ist zu erwarten, dass die anhand der beiden letzten detektierten Markierungen berechnete mittlere Drehzahl die Mindestdrehzahl $n_{min}$ überschreitet. Wird nun der Drehzahlgradient als Differenzenquotient gebildet, ergibt sich ein zu hoher Wert. Um dies zu vermeiden, ist die Auswerteinheit gemäß dem Anspruch 1 weitergebildet,

$$m\left(t_{j'}\right) = \frac{n\left(t_{j'}\right) - n_{min}}{t_{j'} - t_k}$$

für mindestens ein $j' \in \{1, 2, ...\}$ zu berechnen, wenn $n(t_{k'}) < n_{min}$ gilt. Dabei ist $k' \in \{0, 1, ... \}$ so gewählt, dass gilt: $t_{k'} \leq t_{j'} - T < t_{k'+1}$.

Liegt also die erfasste Drehzahl unterhalb der Mindestdrehzahl $n_{min}$, so wird nicht die tatsächlich erfasste Drehzahl, sondern die Mindestdrehzahl $n_{min}$ zur Berechnung des Gradienten herangezogen. Es ergibt sich ein Verlauf des Drehzahlgradienten, der entsprechend kleiner ist und besser den realen Drehzahlenverlauf wiederspiegelt.

Die Lücken zwischen den Zeitpunkten $t_i$, $i \in \{0,1, ... \}$, werden in einer bevorzugten Weiterbildung interpoliert. So gilt weiterbildungsgemäß:

$$m(t') = m(t_j)$$

für mindestens einen Zeitpunkt $t'$ mit $t_j < t' < t_{j+1}$, vorzugsweise für alle Zeitpunkte $t'$ mit $t_j < t' < t_{j+1}$.

Bei einem erfindungsgemäßen Verfahren handelt es sich um das oben beschriebene, von der Auswerteinheit der erfindungsgemäßen Anordnung oder einer bevorzugten Weiterbildung implementierte Verfahren.

Bevorzugte Ausführungsbeispiele sind in den Figuren dargestellt. Übereinstimmende Bezugsziffern kennzeichnen dabei gleiche oder funktionsgleiche Merkmale. Im Einzelnen zeigt:

    Fig. 1 ein erstes aus dem Stand der Technik bekanntes Verfahren zur Gradientenbestimmung;
    Fig. 2 ein zweites aus dem Stand der Technik bekanntes Verfahren zur Gradientenbestimmung;
    Fig. 3 ein erfindungsgemäßes Verfahren zur Gradientenberechnung mit Zeitkonstante;
    Fig. 4 nicht erfindungsgemäßes Verfahren zur Gradientenbestimmung aus dem Stillstand heraus; und

Fig. 5 ein erfindungsgemäßes Verfahren zur Gradientenbestimmung aus dem Stillstand heraus.

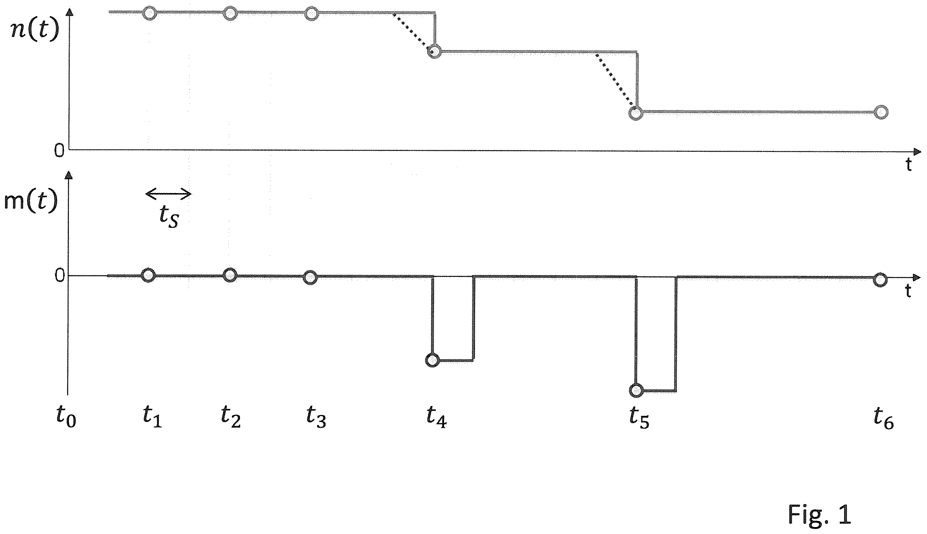

In Fig. 1 bis Fig. 5 ist der Verlauf einer Drehzahlfunktion n(t) und eines Drehzahlgradienten m (t) in Abhängigkeit der Zeit t dargestellt. Gepunktet eingezeichnet ist ein hypothetischer Verlauf der Drehzahl n(t), der dem berechneten Gradienten m (t) entsprechen würde.

Ein sich drehendes Geberrad wird mittels eines Sensors abgetastet. Die Abtastung erfolgt zu diskreten Zeitpunkten, die in einem zeitlichen Abstand - einem Abtastintervall - von $t_s$ aufeinander folgen. Bei den Zeitpunkten $t_i$, $i \in \{0,1, \dots\}$, zu denen eine Markierung des Geberrads von dem Sensor erfasst wird, handelt es sich um ganzzahlige Vielfache des Abtastintervalls $t_s$. Die Drehzahlfunktion $n$ (t) wird gemäß den Figuren 1 bis 4 wie folgt berechnet: für alle $i \in \{1, 2, \dots\}$.

$$n\left(t_i\right) = \frac{1}{a \cdot (t_i - t_{i-1})}$$

Der Drehzahlgradient m (t) beträgt gemäß Fig. $m(t) = \frac{n(t) - n(t - t_s)}{t_s}$. Obgleich der Verlauf der Drehzahl kontinuierlich ist, weist der Gradient m (t) bei $t_3$ und $t_4$ Impulsartige Ausschläge auf. Dies lässt sich verhindern, indem der Gradient m (t) als Differenzenquotient über die letzten beiden vorliegenden Drehzahlinformationen wie folgt gebildet wird:

$$m(t_i) = \frac{n(t_i) - n(t_{i-1})}{t_i - t_{i-1}},$$

mit $i \in \{1, 2, \dots\}$.

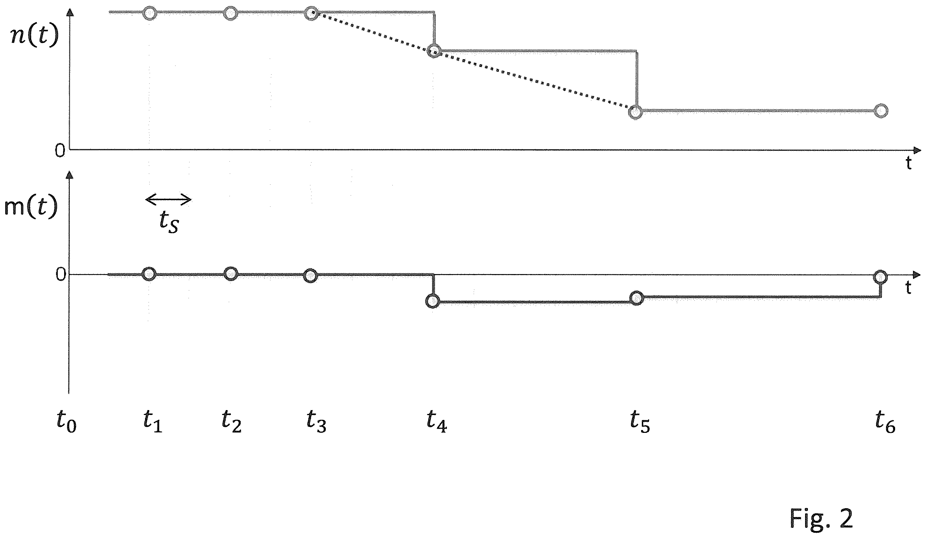

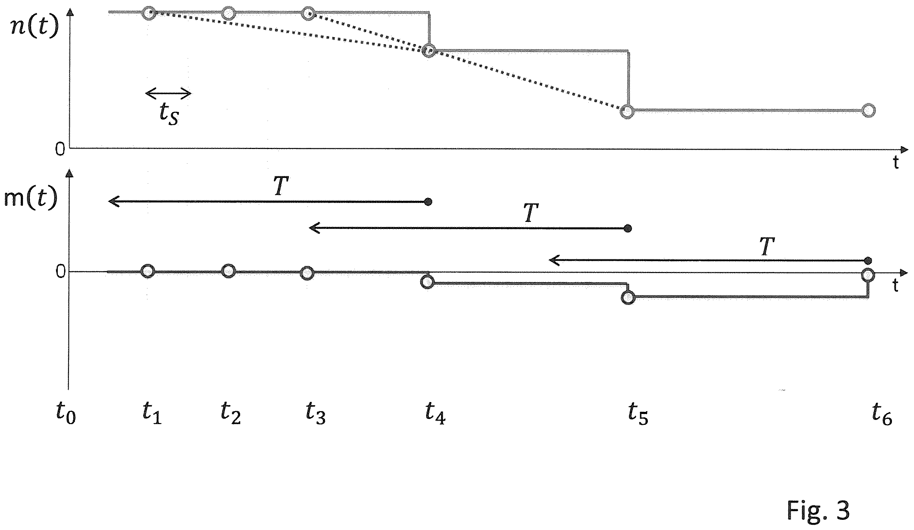

Der in Fig. 2 dargestellte Gradient m (t) ist trotz seines geglätteten Verlaufs anfällig für Rauschen und unterliegt einer Phasenverschiebung, die abhängig von der Drehzahl ist. Diese Problem lässt sich erfindungsgemäß lösen, in dem der Gradient m (t), wie in Fig. 3 dargestellt, über eine parametrierbare Zeitkonstante $T$ gebildet wird. Der Gradient m (t) wird hier für $j \in \{1, 2, \dots\}$ berechnet als

$$m\left(t_j\right) = \frac{n\left(t_j\right) - n\left(t_k\right)}{t_j - t_k},$$

wobei $k \in \{0,1, \dots\}$ so gewählt ist, dass gilt: $t_k \leq t_j - T < t_{k+1}$, mit einer Konstanten $T$.

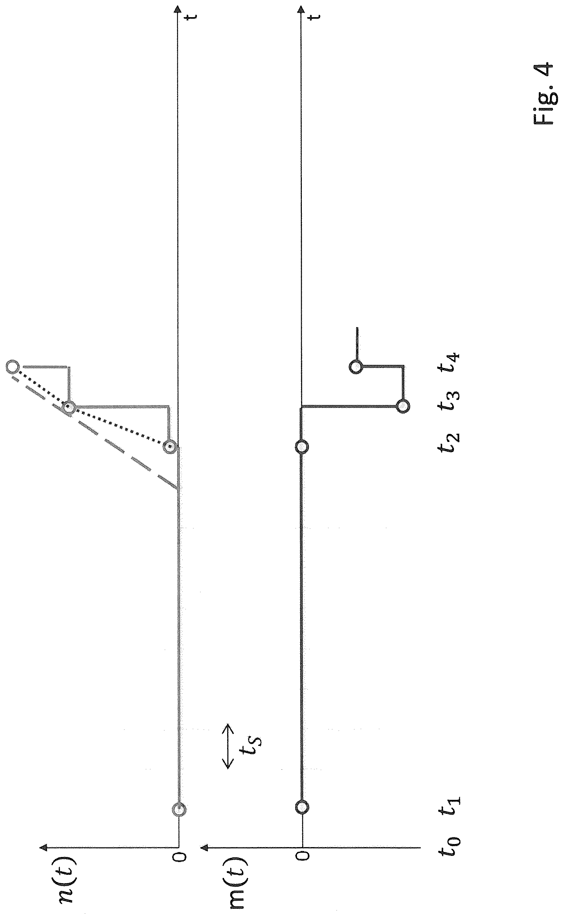

Fig. 4 stellt einen Verlauf der Drehzahlfunktion $n$ (t) bei einem Geberrad dar, das aus dem Stillstand heraus anfährt. Die gestrichelte Linie zeigt den tatsächlichen Drehzahlverlauf. Aufgrund der langen Stillstandzeit zwischen den Zeitpunkten $t_1$ und $t_2$ wird zum Zeitpunkt $t_2$ eine Drehzahl berechnet, die weit unter der tatsächlichen Drehzahl liegt. Dies wiederum führt dazu, dass der Gradient m (t) im Bereich $t_3 \leq t < t_4$ einen Peak bildet.

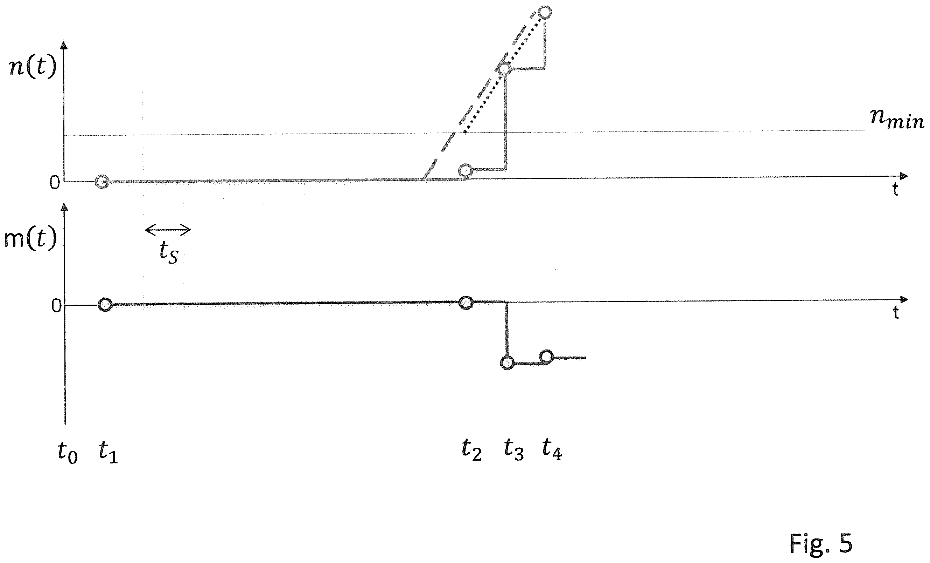

Derartige Peaks lassen sich, wie in Fig. 5 dargestellt, gemäß der beanspruchten Erfindung durch Vorgabe einer Mindestdrehzahl $n_{min}$ eliminieren. Wenn zu einem Zeitpunkt $t$ die aus den Sensorsignalen berechnete Drehzahl n(t) kleiner ist als die Mindestdrehzahl $n_{min}$, so wird die Mindestdrehzahl $n_{min}$ anstelle der berechneten Drehzahl n(t) zur Bestimmung des Gradienten herangezogen. Für $t_3 \leq t < t_4$ wird daher m (t) berechnet als

$$m(t) = \frac{n(t_3) - n_{min}}{t_3 - t_2}.$$

$T$ ist hier der Einfachheit halber als $t_s$ parametriert.

**Patentansprüche**

1.  Anordnung mit einem drehbaren Mittel, einem Sensor und einer Auswerteinheit; wobei

    das Mittel eine Anzahl $a$ von Markierungen aufweist; wobei
    die Markierungen zyklisch einen von dem Sensor erfassten Bereich passieren, wenn das Mittel sich dreht; wobei
    der Sensor ausgebildet ist, ein Signal zu der Auswerteinheit zu übertragen; und wobei
    die Auswerteinheit ausgebildet ist, jedem Signal einen Zeitpunkt $t_i$ seiner Übertragung, mit $i \in \{0, 1, \dots\}$ und $t_i < t_{i+1}$ für alle $i \in \{0,1, \dots\}$, zuzuordnen und
    als Maß für eine Drehzahl des Mittels eine Funktion $n$ (t) in Abhängigkeit der Zeit $t$ zu berechnen, mit

$$n\left(t_i\right) = \frac{1}{a \cdot (t_i - t_{i-1})}$$

    für alle $i \in \{1, 2, \dots\}$; wobei
    die Auswerteinheit ausgebildet ist, als Maß für einen Gradienten der Drehzahl des Mittels eine Funktion m (t) in Abhängigkeit der Zeit $t$ zu berechnen, mit

$$m\left(t_j\right) = \frac{n\left(t_j\right) - n\left(t_k\right)}{t_j - t_k}$$

für mindestens ein $j \in \{1, 2, ... \}$; wobei $k \in \{0,1, ...\}$ so gewählt ist, dass gilt: $t_k \leq t_j$ - $T$ < $t_{k+1}$, mit einer Konstanten $T$; wobei darüber hinaus gilt:

$$m\left(t_{j\prime}\right) = \frac{n\left(t_{j\prime}\right) - n_{min}}{t_{j\prime} - \quad t_{k\prime}}$$

für mindestens ein $j' \in \{1, 2, ... \}$; wobei $n\left(t_{k\prime}\right) < n_{min}$ gilt und $k' \in \{0, 1, ... \}$ so gewählt ist, dass gilt: $t_{k\prime} \leq t_{j\prime}$ - $T$ < $t_{k\prime+1}$.

**2.** Anordnung nach einem der vorhergehenden Ansprüche; **dadurch gekennzeichnet, dass** gilt:

$$m(t\prime) = m\left(t_j\right)$$

für mindestens einen Zeitpunkt $t'$ mit $t_j < t' < t_{j+1}$.

**3.** Verfahren zur Berechnung einer Funktion $n$ (t) in Abhängigkeit der Zeit $t$ als Maß für eine Drehzahl eines drehbaren Mittels; wobei

das Mittel eine Anzahl von $a$ Markierungen aufweist; wobei
die Markierungen zyklisch einen von dem Sensor überwachten Bereich passieren, wenn das Mittel sich dreht; wobei
der Sensor ausgebildet ist, ein Signal zu der Auswerteinheit zu übertragen; wobei jedem Signal einen Zeitpunkt $t_i$ seiner Übertragung zugeordnet wird, mit $i \in \{0,1, ... \}$ und $t_i < t_{i+1}$ für alle $i \in \{0,1, ... \}$; und wobei
als Maß für eine Drehzahl des Mittels eine Funktion $n$ (t) in Abhängigkeit der Zeit $t$ berechnet wird, mit

$$n\left(t_i\right) = \frac{1}{a \cdot \left(t_i - t_{i-1}\right)}$$

für alle $i \in \{1, 2, ... \}$; wobei
als Maß für einen Gradienten der Drehzahl des Mittels eine Funktion m (t) in Abhängigkeit der Zeit $t$ berechnet wird, mit

$$m\left(t_j\right) = \frac{n\left(t_j\right) - n\left(t_k\right)}{t_j - t_k}$$

für mindestens ein $j \in \{1, 2, ... \}$; wobei $k \in \{0, 1, ... \}$ so gewählt ist, dass gilt: $t_k \leq t_j$ - $T$ < $t_{k+1}$, mit einer Konstanten $T$; wobei darüber hinaus gilt:

$$m\left(t_{j\prime}\right) = \frac{n\left(t_{j\prime}\right) - n_{min}}{t_{j\prime} - \quad t_{k\prime}}$$

für mindestens ein $j' \in \{1, 2, ... \}$; wobei $n(t_{k\prime}) < n_{min}$ gilt und $k' \in \{0, 1, ...\}$ so gewählt ist, dass gilt: $t_{k\prime} \leq t_{j\prime}$ - $T$ < $t_{k\prime+1}$.

## Claims

**1.** Arrangement comprising a rotatable means, a sensor, and an evaluation unit;

the means having a number $a$ of markings;
the markings cyclically passing through a region detected by the sensor while the means is in rotation;
the sensor being designed to transmit a signal to the evaluation unit; and
the evaluation unit being designed to assign to each signal a time $t_i$ of its transmission, where $i \in \{0, 1, ... \}$ and $t_i < t_{i+1}$ for all $i \in \{0, 1, ... \}$, and to calculate a function n(t) dependent on time $t$ as a measure for a rotational speed of the means, where

$$n(t_i) = \frac{1}{a \cdot \left(t_i - t_{i-1}\right)}$$

for all $i \in \{1, 2, ... \}$;
the evaluation unit being designed to calculate a function m(t) dependent on time $t$ as a measure for a gradient of the rotational speed of the means, where

$$m\left(t_j\right) = \frac{n\left(t_j\right) - n(t_k)}{t_j - t_k}$$

for at least one $j \in \{1,2, ... \}$; with $k \in \{0, 1, ... \}$ being chosen such that the following applies: $t_k \leq t_j$ - $T$ < $t_{k+1}$, with a constant $T$; with moreover the following applying:

$$m\left(t_{j\prime}\right) = \frac{n\left(t_{j\prime}\right) - n_{min}}{t_{j\prime} - t_{k\prime}}$$

for at least one $j' \in \{1,2, ... \}$; with $n(t_{k\prime}) < n_{min}$ applying *and* $k' \in \{0, 1, ... \}$ being chosen such that the following applies: $t_{k\prime} \leq t_{j\prime}$- $T$ < $t_{k\prime+1}$.

**2.** Arrangement according to Claim 1, **characterized in that** the following applies:

$$m(t') = m(t_j)$$

for at least one time $t'$ with $t_j < t' < t_{j+1}$.

**3.** Method for calculating a function n(t) dependent on time $t$ as a measure for a rotational speed of a rotatable means;

the means having a number $a$ of markings;
the markings cyclically passing through a region detected by the sensor while the means is in rotation;
the sensor being designed to transmit a signal to the evaluation unit;
each signal being assigned a time $t_i$ of its transmission, where $i \in \{0,1, \dots \}$ and $t_j < t_{j+1}$ for all $i \in \{0,1, \dots \}$; and
a function n(t) dependent on time $t$ being calculated as a measure for a rotational speed of the means, where

$$n(t_i) = \frac{1}{a \cdot (t_i - t_{i-1})}$$

for all $i \in \{1,2, \dots \}$;
a function m(t) dependent on time $t$ being calculated as a measure for a gradient of the rotational speed of the means, where

$$m(t_j) = \frac{n(t_j) - n(t_k)}{t_j - t_k}$$

for at least one $j \in \{1,2, \dots \}$; with $k \in \{0,1, \dots \}$ being chosen such that the following applies: $t_k \le t_j - T < t_{k+1}$, with a constant $T$; with moreover the following applying:

$$m(t_{j'}) = \frac{n(t_{j'}) - n_{min}}{t_{j'} - t_{k'}}$$

for at least one $j' \in \{1,2, \dots \}$; with $n(t_{k'}) < n_{min}$ applying and $k' \in \{0,1, \dots \}$ being chosen such that the following applies: $t_{k'} \le t_{j'} - T < t_{k'+1}$.

**Revendications**

**1.** Arrangement comprenant un moyen rotatif, un capteur et une unité d'interprétation ;

le moyen possédant un nombre $a$ de marquages ;
les marquages passant cycliquement dans une zone balayée par le capteur lorsque le moyen tourne ;
le capteur étant configuré pour transmettre un signal à l'unité d'interprétation ; et
l'unité d'interprétation étant configurée pour associer à chaque signal un instant $t_i$ de sa transmission, avec $i \in \{0,1, \dots \}$ et $t_j < t_{j+1}$ pour tous les $i \in \{0,1, \dots \}$ et pour calculer en tant que mesure d'une vitesse de rotation du moyen une fonction n(t) en fonction du temps $t$, avec

$$n(t_i) = \frac{1}{a \cdot (t_i - t_{i-1})}$$

pour tous les $i \in \{1,2, \dots \}$ ;
l'unité d'interprétation étant configurée pour calculer, en tant que mesure pour un gradient de la vitesse de rotation du moyen, une fonction m(t) en fonction du temps $t$, avec

$$m(t_j) = \frac{n(t_j) - n(t_k)}{t_j - t_k}$$

pour au moins un $j \in \{1,2, \dots \}$ ;
$k \in \{0,1, \dots \}$ étant choisi de telle sorte que la relation suivante est vérifiée : $t_k \le t_j - T < t_{k+1}$, avec une constante $T$ ;
la relation suivante étant en plus vérifiée :

$$m(t_{j'}) = \frac{n(t_{j'}) - n_{min}}{t_{j'} - t_{k'}}$$

pour au moins un $j' \in \{1,2, \dots \}$ ;
la relation $n(t_{k'}) < n_{min}$ étant vérifiée et $k' \in \{0,1, \dots \}$ étant choisi de telle sorte que la relation suivante est vérifiée : $t_{k'} \le t_{j'} - T < t_{k'+1}$.

**2.** Arrangement selon la revendication 1, **caractérisé en ce que** la relation suivante est vérifiée :

$$m(t') = m(t_j)$$

pour au moins un instant $t'$ avec $t_j < t' < t_{j+1}$.

**3.** Procédé de calcul d'une fonction n(t) en fonction du temps $t$ en tant que mesure pour une vitesse de rotation d'un moyen rotatif ;

le moyen possédant un nombre *a* de marquages ;

les marquages passant cycliquement dans une zone balayée par le capteur lorsque le moyen tourne ;

le capteur étant configuré pour transmettre un signal à l'unité d'interprétation ;

à chaque signal étant associé un instant $t_i$ de sa transmission, avec $i \in \{0,1, \dots\}$ et $t_i < t_{i+1}$ pour tous les $i \in \{0,1, \dots\}$ ; et

une fonction n(t) en fonction du temps *t* étant calculée en tant que mesure d'une vitesse de rotation du moyen, avec

$$n(t_i) = \frac{1}{a \cdot (t_i - t_{i-1})}$$

pour tous les $i \in \{1,2, \dots\}$ ;

une fonction m(t) en fonction du temps *t* étant calculée en tant que mesure pour un gradient de la vitesse de rotation du moyen, avec

$$m(t_j) = \frac{n(t_j) - n(t_k)}{t_j - t_k}$$

pour au moins un $j \in \{1,2, \dots\}$ ;

$k \in \{0,1, \dots\}$ étant choisi de telle sorte que la relation suivante est vérifiée : $t_k \le t_j - T < t_{k+1}$ , avec une constante *T* ;

la relation suivante étant en plus vérifiée :

$$m(t_{j'}) = \frac{n(t_{j'}) - n_{min}}{t_{j'} - t_{k'}}$$

pour au moins un $j'  \in \{1,2, \dots\}$ ;

la relation $n(t_{k'}) < n_{min}$ étant vérifiée et $k' \in \{0,1, \dots\}$ étant choisi de telle sorte que la relation suivante est vérifiée : $t_{k'} \le t_{j'} - T < t_{k'+1}$.

$n(t)$

$m(t)$

$t_S$

$t_0 \quad t_1 \quad t_2 \quad t_3 \quad t_4 \quad t_5 \quad t_6$

Fig. 1

Fig. 2

EP 3 721 238 B1

Fig. 3

EP 3 721 238 B1

$n(t)$

$0$

$t$

$m(t)$

$t_S$

$0$

$t$

$t_0$  $t_1$

$t_2$  $t_3$  $t_4$

Fig. 4

Fig. 5

EP 3 721 238 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4635201 A
- US 5916295 A

- US 2008110283 A